# EUROPÄISCHE PATENTSCHRIFT

(11) **EP 3 793 805 B1**
(45) Veröffentlichungstag und Bekanntmachung des Hinweises auf die Patenterteilung: **15.11.2023**
(21) Anmeldenummer: 19782503.7
(22) Anmeldetag: 25.09.2019
(51) Int. Cl.: B29C 49/78, B29C 49/36, B29C 49/48, B29C 49/64

(54) **VORRICHTUNG UND VERFAHREN ZUM UMFORMEN VON KUNSTSTOFFVORFORMLINGEN ZU KUNSTSTOFFBEHÄLTNISSEN MIT TEMPERATURÜBERWACHUNG**
DEVICE AND METHOD FOR FORMING PLASTIC PREFORMS INTO PLASTIC CONTAINERS USING TEMPERATURE MONITORING
DISPOSITIF ET PROCÉDÉ DE MOULAGE D'ÉBAUCHES EN MATIÈRE PLASTIQUE EN RÉCIPIENTS EN MATIÈRE PLASTIQUE COMPRENANT UNE SURVEILLANCE DE TEMPÉRATURE

(30) Priorität: 25.09.2018 DE 102018123623
(43) Veröffentlichungstag der Anmeldung: 24.03.2021
(73) Patentinhaber: Krones AG, 93073 Neutraubling (DE)
(72) Erfinder: BUESS, Armin, 93073 Neutraubling (DE); SENN, Konrad, 93073 Neutraubling (DE); MOEWES, Simon, 93073 Neutraubling (DE); BRUNNER, Andreas, 93073 Neutraubling (DE); VOTH, Klaus, 93073 Neutraubling (DE); HOELLRIEGL, Thomas, 93073 Neutraubling (DE)
(74) Vertreter: Hannke Bittner & Partner mbB Regensburg
(86) Internationale Anmeldenummer: PCT/EP2019/075845
(87) Internationale Veröffentlichungsnummer: WO 2020/064828

(56) Entgegenhaltungen:
- EP-A1- 2 537 664
- WO-A1-2016/051317
- DE-A1-102015 101 769
- DE-A1-102015 122 106
- FR-A1- 3 031 928
- US-A1- 2012 007 289

## Beschreibung

Die vorliegende Erfindung bezieht sich auf eine Vorrichtung und ein Verfahren zum Umformen von Kunststoffvorformlingen zu Kunststoffbehältnissen. Derartige Verfahren sind aus dem Stand der Technik seit Langem bekannt. Dabei werden üblicherweise erwärmte Kunststoffvorformlinge Umformungsstationen zugeführt und innerhalb dieser Umformungsstationen insbesondere durch Beaufschlagung mit einem gasförmigen oder flüssigen Medium zu Kunststoffbehältnissen umgeformt. Dabei ist es aus dem Stand der Technik einerseits bekannt, die Kunststoffvorformlinge durch ein gasförmiges Medium und insbesondere Druckluft zu expandieren, neuerdings ist es jedoch auch bekannt geworden, die Kunststoffvorformlinge mittels einer Flüssigkeit zu expandieren, insbesondere mittels eines abzufüllenden Getränks. Die vorliegende Erfindung ist für beide Vorgehensweisen anwendbar Dabei ist es im Stand der Technik oftmals gewünscht, bestimmte Prozessparameter zu überwachen, beispielsweise eine Temperatur der Blasformen innerhalb derer die Kunststoffvorformlinge expandiert werden.

Aus der GB 2136114A ist ein Verfahren zur Kontrolle der Temperatur einer Form bekannt. Dabei wird bei einer stehenden Form eine Messeinheit zur Messung der Infrarotstrahlung eingesetzt, sodass die Strahlung gemessen werden kann, sodass mit den erhaltenen Werten eine optimale Anpassung der Temperatur vollzogen werden kann.

Die US 2012261850 A1 beschreibt ein Kontrollsystem, um die Kühlzykluszeit einer leeren Form zu steuern. Dabei ist ein Temperatursensor vorgesehen.

Die DE 102012107811 A1 beschreibt eine Vorrichtung zum Erwärmen von Kunststoffvorformlingen. Dabei ist eine Sensoreinrichtung vorgesehen, welche teilweise außerhalb eines Reinraums angeordnet ist.

Das Dokument EP 2 537 664 offenbart ein Verfahren gemäß dem Oberbegriff des Anspruchs 1 und eine Vorrichtung gemäß dem Oberbegriff des Anspruchs 8.

Bei derartigen Maschinen ist im Stand der Technik üblicherweise erforderlich, bestimmte Prozessparameter, beispielsweise die Temperatur von bestimmten Bestandteilen der Vorrichtungen, insbesondere der Blasform, und insbesondere derjenigen Wandungen, die die Kunststoffvorformlinge kontaktieren, zu messen. So werden beispielsweise in Blasformen Temperatursensoren eingesetzt.

Ein großes Problem bei der Benutzung von elektronischen Bauteilen im Inneren der Form ist jedoch, dass diese Komponenten einem erhöhten Risiko der Beschädigung bei einem Formwechsel ausgesetzt sind. Bei einem Formwechsel müssen auch alle Versorgungsleitungen abgesteckt und anschließend wieder angeschlossen werden. Durch diese Arbeiten sind die Komponenten einem erhöhten Verschleiß ausgesetzt und in dem Fall, dass manche Versorgungsleitungen nicht abgesteckt werden, besteht auch die Gefahr, dass beispielsweise ein Temperatursensor durch unkonzentriertes Arbeiten herausgerissen oder beschädigt wird. Umgekehrt besteht auch ein Risiko, dass die Maschine zum Beispiel ohne Temperatursensor in Betrieb genommen wird. Entsprechend wäre es vorteilhaft, wenn so wenige Komponenten wie möglich bei dem Formwechsel ausgetauscht und beachtet werden müssen.

Ein weiteres Problem bei der Verwendung von Temperatursensoren ist der Bedarf der Kalibrierung. Bei der Nutzung etwa von Kameras oder anderen Infrarotsensoren sollten regelmäßig Kalibrierungen durchgeführt werden, damit die Temperaturen genau gemessen werden können und keine zu großen Abweichungen bestehen.

Der vorliegenden Erfindung liegt daher die Aufgabe zugrunde, ein Verfahren und eine Vorrichtung zur Verfügung zu stellen, welche insbesondere bei Formatwechseln oder Bauteilwechseln die Gefahr von Beschädigungen an elektrischen Bauteilen verringern. Daneben soll eine möglichst einfache Vorgehensweise zur Verfügung gestellt werden, um derartige Anlagen zu betreiben.

Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Umformen von Kunststoffvorformlingen zu Kunststoffbehältnissen werden an einem beweglichen Träger wenigstens eine und bevorzugt eine Vielzahl von Umformungsstationen zum Umformen der Kunststoffvorformlinge zu den Kunststoffbehältnissen angeordnet und diese Umformungsstationen werden wenigstens zeitweise während des Umformungsvorgangs entlang eines vorgegebenen Transportpfads bewegt. Dabei weisen die Umformungsstationen jeweils Blasformanordnungen auf, wobei die Blasformteile dieser Blasformanordnungen zum Öffnen und Schließen der Blasformanordnungen bewegt werden bzw. wenigstens eines der Blasformteile gegenüber dem anderen Blasformteil bewegt wird.

In einem geschlossenen Zustand der Blasformanordnung werden weiterhin in einem durch die Blasformteile gebildeten Hohlraum die Kunststoffvorformlinge durch Beaufschlagung mit einem fließfähigen Medium zu den Kunststoffbehältnissen umgeformt, wobei wenigstens zeitweise ein für die Umformungsstationen und/oder Blasformanordnungen charakteristischer Wert (und insbesondere ein physikalischer Wert) mittels einer Messeinrichtung gemessen wird.

Erfindungsgemäß erfolgt die Messung mittels einer nicht an der Blasformanordnung angeordneten Messeinrichtung.

Es wird daher vorgeschlagen, dass eine Messeinrichtung nicht an der Blasformanordnung und insbesondere nicht an auswechselbaren und/oder auszuwechselnden Teilen der Blasformanordnung angeordnet ist, sondern an einer anderen Position der Maschine, sodass das besagte Element beispielsweise bei einem Formenwechsel nicht gewechselt zu werden braucht.

Bei einer bevorzugten Ausführungsform handelt es sich bei dem bewegbaren Träger um einen drehbaren Träger. Dies bedeutet, dass die wenigstens eine Umformungsstation und bevorzugt eine Vielzahl von Umformungsstationen an einem drehbaren Träger (auch als Blasrad bezeichnet) angeordnet sind. Damit werden bei einer Bewegung des Trägers, bei der es sich insbesondere um eine Drehbewegung handelt, die Umformungsstationen und damit insbesondere auch die zu expandierenden Kunststoffvorformlinge entlang einer kreisförmigen und/oder im Wesentlichen kreisförmigen Bahn bewegt.

Bei einem weiteren bevorzugten Verfahren weist die Blasformanordnung zwei Seitenteile auf, die bezüglich einander zum Öffnen und Schließen der Blasformen geschwenkt werden. Dabei erfolgt bevorzugt eine Schwenkung um eine vertikale Achse und/oder um eine Achse, die parallel zu dem zu expandierenden Kunststoffvorformling angeordnet ist.

Bevorzugt weisen die Blasformanordnungen auch noch ein Bodenteil auf, welches gemeinsam mit den beiden Seitenteilen den besagten Hohlraum ausbildet.

Bei einer weiteren vorteilhaften Ausführungsform weisen die Umformungsstationen (jeweils) stangenförmige Körper bzw. Reckstangen auf, welche in die Kunststoffvorformlinge einführbar sind, um diese in deren Längsrichtung zu dehnen. Besonders bevorzugt handelt es sich damit bei einer entsprechenden Umformungsvorrichtung um eine Blasformmaschine und insbesondere um eine Streckblasmaschine.

Wie oben erwähnt, kann es sich bei dem Medium zum Expandieren der Kunststoffvorformlinge um ein gasförmiges oder auch ein flüssiges Medium handeln.

Bei einem weiteren bevorzugten Verfahren werden Teile der Blasformanordnung temperiert. Insbesondere werden Teile der Blasformanordnung erwärmt. Bevorzugt erfolgt dabei diese Erwärmung mittels elektrischer Energie oder mittels eines fließfähigen und insbesondere flüssigen Temperiermediums. So kann beispielsweise heißes Öl oder Wasser verwendet werden, um die Seitenteile der Blasform und/oder das Bodenteil der Blasform zu temperieren. Dabei kann dieses Temperieren mittels Kanälen erfolgen, welche in der Blasform selbst angeordnet sind und/oder auch mittels Kanälen, welche in Blasformschalen angeordnet sind und/oder auch in einem Blasformträger.

Bei einem weiteren bevorzugten Verfahren handelt es sich bei dem charakteristischen Wert um eine Temperatur und insbesondere um eine Temperatur wenigstens eines Bereichs der Blasformanordnung. Dabei kann es sich insbesondere um eine Temperatur einer Wandung der Blasform handeln und insbesondere einer Wandung, welche den Kunststoffvorformling kontaktiert.

Damit wird im Rahmen der Erfindung eine Vorrichtung und ein Verfahren mit Mitteln zur Messung von physikalischen Werten oder Zuständen beschrieben. Diese Mittel bzw. der die die Messeinrichtungen sind dabei insbesondere Sensoren zur Messung einer Temperatur und werden besonders bevorzugt im Bereich von Formmaschinen zur Herstellung von Behältern aus thermoplastischem Material verwendet. Insbesondere handelt es sich dabei um Blasformmaschinen oder Streckblasmaschinen.

Bei den Messeinrichtungen und/oder Sensoren kann es sich, wie unten genauer ausgeführt in einer Ausführungsform um ein Pyrometer oder eine Kamera oder eine Vielzahl dieser Einrichtungen handeln. Dabei kann ein derartiges Pyrometer oder eine Kamera bzw. Bildaufnahmeeinrichtung entweder stationär in einer bestimmten Position oder auf dem rotierenden Bereich der Vorrichtung angeordnet sein.

Wird die Bildaufnahmeeinrichtung oder das Pyrometer stationär angeordnet, kann die Temperatur der einzelnen Formhälften von einer einzigen Messeinrichtung gemessen werden, wenn die Formhälften aufgrund der Drehung des Karussells bewegt werden.

Es wäre aber auch möglich, noch weitere Messeinrichtungen zu verwenden. Wie unten genauer erwähnt, können auch mehrere Messeinrichtungen, beispielsweise zwei oder mehr Kameras oder Pyrometer vorgesehen sein, um eine getrennte Messung der Formhälften und des Formbodens der Blasformanordnung vorzunehmen.

Bei einem weiteren bevorzugten Verfahren wird die Blasformanordnung wenigstens zeitweise während der Messung gegenüber der Messeinrichtung bewegt. Dabei kann es sich um die Bewegung an dem Blasrad handeln, das heißt beispielsweise eine kreisförmige Bewegung. Daneben oder zusätzlich kann sich diese Relativbewegung auch aus dem Öffnungsoder Schließvorgang der Blasformanordnung ergeben.

Damit ist es wie unten genauer erwähnt möglich, dass die Messeinrichtung ebenfalls auf dem beweglichen Träger angeordnet ist, aber auch dass diese stationär angeordnet ist.

Bei einem weiteren bevorzugten Verfahren werden die Blasformanordnungen wenigstens zeitweise gewechselt, jedoch wird bei einem derartigen Wechsel der Blasformanordnungen die Messeinrichtung nicht gewechselt. Dies ist insbesondere dadurch erreichbar, dass die Messeinrichtung bevorzugt während Wechselvorgängen an der Maschine bzw. an der Vorrichtung verbleibt.

Bei einem weiteren bevorzugten Verfahren weist die Messeinrichtung eine Bildaufnahmeeinrichtung und/oder ein Pyrometer auf. Bei dieser Bildaufnahmeeinrichtung kann es sich insbesondere, aber nicht ausschließlich um eine Foto- oder Filmkamera handeln. Besonders bevorzugt handelt es sich bei der Bildaufnahmeeinrichtung um eine Wärmebildkamera. Es kann jedoch, wie oben erwähnt, auch ein Pyrometer Anwendung finden.

Bei einem weiteren bevorzugten Verfahren wird der besagte Messwert berührungslos gemessen. Insbesondere wird bevorzugt der Messwert während einer Relativbewegung zwischen der Blasformanordnung und der Messeinrichtung gemessen.

Bei einem weiteren bevorzugten Verfahren werden mehrere Werte (insbesondere mehrere Werte einer Blasformanordnung) und insbesondere mehrere Temperaturwerte mittels mehreren Messeinrichtungen gemessen. So ist es möglich, dass die Temperaturen beider Seitenteile der Blasformanordnung und/oder auch des Bodenteils gemessen werden. Es wäre jedoch auch denkbar, dass mittels einer Messeinrichtung mehrere Temperatur- bzw. Messwerte gemessen und/oder abgefragt werden.

Bei einem weiteren bevorzugten Verfahren misst die Messeinrichtung wenigstens zeitweise in einem Bereich der Blasformanordnung. Dabei kann die Messung besonders bevorzugt in einem Sackloch der Blasformanordnung durchgeführt werden. Bei einem weiteren bevorzugten Verfahren misst die Messeinrichtung in einem geöffneten Zustand der Blasformanordnung.

Damit ist besonders bevorzugt eine Messeinrichtung vorgesehen, welche insbesondere dazu geeignet und bestimmt ist, in einem geöffneten Zustand der Blasformanordnung zu messen. Bei dem erwähnten Sackloch handelt es sich um eine bevorzugt geschwärzte Öffnung, insbesondere im Inneren der Blasformanordnung und insbesondere im Inneren der eigentlichen Blasform. Daneben wäre es auch möglich, dass die Messeinrichtung die Temperatur der Innenseite der Formhälften misst, wenn die Blasform sich gerade in einem zumindest teilweise geöffneten Zustand befindet.

Bei einer weiteren bevorzugten Ausführungsform ist auf jeder Form mindestens ein Pyrometer angeordnet, welches bevorzugt die Temperaturen der Formhälften und eventuell des Bodenteils der Blasform misst.

Dabei ist es möglich, dass ein Pyrometer für beide Formhälften und ein Pyrometer für den Bodenteil oder auch ein Pyrometer pro Formhälfte und ein Pyrometer für das Bodenteil vorgesehen ist.

Bei einem bevorzugten Verfahren werden die Pyrometer wenigstens zeitweise und bevorzugt regelmäßig kalibriert. Insbesondere erfolgt dabei eine Kalibrierung bei einem Startvorgang der entsprechenden Maschine.

Dabei wird bevorzugt eine bestimmte Drehung des Blasrads, insbesondere mindestens eine Umdrehung des Blasrads bzw. Karussells durchgeführt, sodass alle Pyrometer mindestens einmal an einer Kalibrierungsstelle vorbeikommen. An dieser Stelle kann eine Temperaturmesseinrichtung, wie etwa ein Temperaturfühler, etwa ein PT100, angeordnet sein, sodass die Pyrometer kalibriert werden können. Bevorzugt wird zu Beginn der Produktion eine Kalibrierungsrunde durchgeführt.

Durch die Verwendung von Mitteln zur Temperaturmessung, welche außerhalb der Blasform und insbesondere auf dem stationären Bereich der Vorrichtung angebracht sind, ist das Risiko der Beschädigung bei Austauscharbeiten, wie zum Beispiel einem Blasformwechsel, durch unkonzentriertes Arbeiten reduziert. Entsprechend wird auch der wirtschaftliche Ertrag durch Reparatur und damit zusammenhängenden Produktionsausfall nicht vermindert. Die Verwendung einer Kamera oder eines Pyrometers, insbesondere eines Pyrometers, welches im stationären Bereich angeordnet ist und die Temperatur sämtlicher Formhälften misst, erhält man erhebliche Vorteile, da weniger Bauteile verwendet werden müssen und diese Bauteile zusätzlich nicht im rotierenden Teil der Anlage angeordnet sind.

Aus diesem Grunde ist die (insbesondere elektrische) Versorgung dieser Bauteile einfacher, da die Leitungen nicht von stationären auf den rotierenden Bereich gekoppelt werden müssen. Daneben wird eine Bildaufnahmeeinrichtung oder auch ein Pyrometer keiner Belastung durch den Träger ausgesetzt, wie beispielsweise Vibrationen oder dergleichen. In einer Ausführungsform mit einer Vielzahl von Pyrometern ist das automatische Kalibrieren der Mittel der Temperaturmessung in den einzelnen Formen bzw. den einzelnen Formhälften ein großer Vorteil. Durch die Anbringung von mehreren Mitteln der Temperaturmessung in den Formen kann eine präzise und individuelle Temperaturmessung und Steuerung der einzelnen Formen oder Formhälften ermöglicht werden.

Wie oben erwähnt, weist die Vorrichtung bevorzugt auch Temperiereinrichtungen auf, welche dazu geeignet und bestimmt sind, die jeweiligen Blasformanordnungen zu temperieren. Besonders bevorzugt sind Steuerungseinrichtungen vorgesehen, welche diese Temperiereinrichtungen ansteuern. Diese Steuerungseinrichtungen können die Steuerung dabei bevorzugt in Reaktion auf von den Messeinrichtungen aufgenommene bzw. gemessene Werte durchführen.

Indem die oben erwähnte Messeinrichtung bzw. einzelnen Messmittel automatisch kalibriert werden, wird die Zeit, welche ansonsten für die Kalibrierung benötigt werden würde, reduziert und dementsprechend kann die Maschine mehr produzieren und den wirtschaftlichen Gewinn steigern.

Bevorzugt wird dabei eine entsprechende Kalibriereinrichtung stationär angeordnet. So können die einzelnen Umformungsstationen insbesondere mit den Messeinrichtungen schon die derartige Kalibriereinrichtung durchlaufen.

Die vorliegende Erfindung ist weiterhin auf eine Vorrichtung zum Umformen von Kunststoffvorformlingen zu Kunststoffbehältnissen gerichtet, wobei an einem beweglichen Träger wenigstens eine und bevorzugt eine Vielzahl von Umformungsstationen zum Umformen der Kunststoffvorformlinge zu den Kunststoffbehältnissen angeordnet ist und diese Umformungsstationen wenigstens zeitweise während des Umformungsvorgangs entlang eines vorgegebenen Transportpfads bewegbar sind, wobei die Umformungsstationen jeweils Blasformanordnungen aufweisen, wobei Blasformteile dieser Blasformanordnungen zum Öffnen und Schließen der Blasformanordnungen bewegbar sind und in einem geschlossenen Zustand der Blasformanordnung in einem durch die Blasformteile gebildeten Hohlraum die Kunststoffvorformlinge durch Beaufschlagung mit einem fließfähigen Medium zu den Kunststoffbehältnissen umformbar sind, wobei die Vorrichtung eine Messeinrichtung aufweist, welche wenigstens zeitweise einen für die Umformungsstation und/oder die Blasformanordnung charakteristischen Wert misst.

Erfindungsgemäß ist die Messeinrichtung nicht in oder an der Blasformanordnung angeordnet und bevorzugt von dieser beabstandet. Bevorzugt wird unter der Messeinrichtung dasjenige Element verstanden, welches aktiv eine Messung durchführt. Dabei ist es jedoch möglich, dass diese Messeinrichtung mit bestimmten Bereichen der Blasform zusammenwirkt, beispielsweise mit dem oben beschriebenen Sackloch.

Die Messeinrichtung ist wenigstens zeitweise auf einen Bereich der Blasformanordnung und insbesondere ein an oder in dieser angeordnetes bzw. ausgebildetes Loch und insbesondere Sackloch ausgerichtet.

Dabei ist es möglich, dass die Messeinrichtung in diesem Sackloch misst. Dieses Sackloch kann dabei eine geschwärzte Öffnung aufweisen.

Bevorzugt weist die Vorrichtung mehrere Messeinrichtungen zur Vermessung einer einzelnen Blasformanordnung auf. So können beispielsweise Temperaturmesseinrichtungen zum Ermitteln der Temperatur der beiden Seitenteile vorgesehen sein sowie auch eine (Temperatur)Messeinrichtung zum Messen der Temperatur des Bodenteils.

Bei einer weiteren vorteilhaften Ausführungsform weist die Vorrichtung eine Kalibriereinrichtung zum Kalibrieren wenigstens einer der genannten Messeinrichtungen auf. Bevorzugt ist dabei diese Kalibriereinrichtung stationär und insbesondere stationär gegenüber dem beweglichen Träger angeordnet. Bei einer weiteren vorteilhaften Ausführungsform dient diese Kalibriereinrichtung zum Kalibrieren mehrerer Messeinrichtungen und besonders bevorzugt zum Kalibrieren sämtlicher Messeinrichtungen.

Weitere Vorteile und Ausführungsformen ergeben sich aus den beigefügten Zeichnungen. Darin zeigen:
- Fig. 1: eine Darstellung einer erfindungsgemäßen Vorrichtung in einer ersten Ausführungsform; und
- Fig. 2: eine Darstellung einer erfindungsgemäßen Vorrichtung in einer zweiten Ausführungsform.

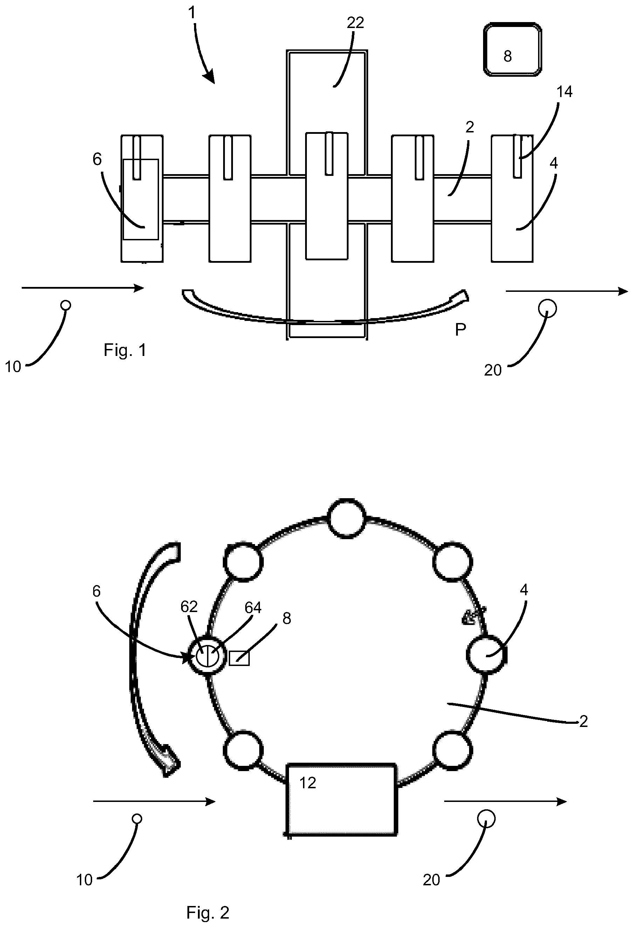

Figur 1 zeigt eine schematische Darstellung einer erfindungsgemäßen Vorrichtung 1 zum Umformen von Kunststoffvorformlingen zu Kunststoffbehältnissen. Dabei werden der Vorrichtung wie durch den linken Pfeil angedeutet Kunststoffvorformlinge 10 zugeführt, diese expandiert und als Kunststoffbehältnisse bzw. Kunststoffflaschen 20, wie durch den rechten Pfeil angedeutet, wieder abgeführt. In der Durchführung kann dabei diese Zuführung und Abführung der Kunststoffvorformlinge bzw. Kunststoffbehältnisse mittels Transfersternen erfolgen.

Das Bezugszeichen 2 kennzeichnet einen drehbaren Träger, der bezüglich einer Hauptwelle 22 bzw. mittels einer Hauptwelle gedreht wird. An diesem Träger 2 ist eine Vielzahl von Umformungsstationen 4 angeordnet. Jede dieser Umformungsstationen kann eine Blasformanordnung 6 (nur eine dargestellt) aufweisen.

Das Bezugszeichen 14 kennzeichnet eine Ausnehmung bzw. ein Sackloch, welche in jeder Blasform angeordnet sein kann. Dabei kann sich diese Bohrung bzw. dieses Sackloch 14 bis in den zu überprüfenden bzw. zu messenden Bereich der Blasformanordnung erstrecken.

Weiter kann die Vorrichtung einen Drehverteiler aufweisen, der beispielsweise ein Temperiermedium auf die einzelnen Umformungsstationen 4 aufteilen kann. Daneben kann ein derartiger Drehverteiler auch etwa elektrische Energie auf die einzelnen Umformungsstationen aufteilen. In diesem Fall ist dieser Drehverteiler insbesondere als sog. Schleifring ausgeführt. Das Bezugszeichen P kennzeichnet die Drehrichtung des Trägers 2.

Figur 2 zeigt eine weitere Vorrichtung in einer erfindungsgemäßen Ausführungsform. Hierbei weisen die einzelnen Umformungsstationen wie auch bei der in Figur 1 gezeigten Ausführungsform Blasformanordnungen 6 auf, welche hier zwei Seitenteile 62 und 64 aufweisen. Daneben weisen die Blasformanordnungen auch (nicht gezeigtes) Bodenteil auf.

Auf dem Träger 2 sind hier ebenfalls die Messeinrichtungen 8 angeordnet, jedoch in einem Bereich, derart dass diese nicht mit ausgetauscht werden. Bei einem Wechsel der Blasformanordnungen verbleiben dabei die Messeinrichtungen 8 auf dem Träger.

Zu einem bestimmten Zeitraum, beispielsweise zu Beginn einer Produktion werden diese Messeinrichtungen durch eine Kalibriereinrichtung gefahren und mittels dieser Kalibriereinrichtung 12 kalibriert.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: drehbarer Träger
- 4: Umformungsstationen
- 6: Blasformanordnung
- 8: Messeinrichtungen
- 10: Kunststoffvorformlinge
- 12: Kalibriereinrichtung
- 14: Ausnehmung bzw. Sackloch
- 20: Kunststoffflaschen
- 22: Hauptwelle
- 62: Seitenteil der Blasformanordnung
- 64: Seitenteil der Blasformanordnung
- P: Drehrichtung des Trägers

## Patentansprüche

1. Verfahren zum Umformen von Kunststoffvorformlingen (10) zu Kunststoffbehältnissen (20), wobei an einem beweglichen Träger (2) wenigstens eine und bevorzugt eine Vielzahl von Umformungsstationen (4) zum Umformen der Kunststoffvorformlinge (10) zu den Kunststoffbehältnissen (20) angeordnet ist und diese Umformungsstationen (4) wenigstens zeitweise während des Umformungsvorgangs entlang eines vorgegebenen Transportpfads bewegt werden, wobei die Umformungsstationen (4) jeweils Blasformanordnungen (6) aufweisen, wobei Blasformteile (62, 64) dieser Blasformanordnungen (6) zum Öffnen und Schließen der Blasformanordnungen (6) bewegt werden, und in einem geschlossenen Zustand der Blasformanordnung (6) in einem durch die Blasformteile (62, 64) gebildeten Hohlraum die Kunststoffvorformlinge (10) durch Beaufschlagung mit einem fließfähigen Medium zu den Kunststoffbehältnissen (20) umgeformt werden, wobei wenigstens zeitweise ein für die Umformungsstation (4) und/oder für die Blasformanordnung (6) charakteristischer Wert mittels einer Messeinrichtung (8) gemessen wird,
wobei
die Messung mittels einer nicht an der Blasformanordnung (6) angeordneten Messeinrichtung (8) erfolgt,
**dadurch gekennzeichnet, dass**
die Messeinrichtung (8) wenigstens zeitweise auf einen Bereich der Blasformanordnung (6) ausgerichtet ist.

2. Verfahren nach Anspruch 1,
**dadurch gekennzeichnet, dass**
der charakteristische Wert eine Temperatur und insbesondere eine Temperatur wenigstens eines Bereichs der Blasformanordnung (6) ist.

3. Verfahren nach wenigstens einem der vorangegangenen Ansprüche,
**dadurch gekennzeichnet, dass**
die Blasformanordnung (6) wenigstens zeitweise während der Messung gegenüber der Messeinrichtung bewegt wird.

4. Verfahren nach wenigstens einem der vorangegangenen Ansprüche,
**dadurch gekennzeichnet, dass**
die Blasformanordnungen (6) wenigstens zeitweise gewechselt werden, jedoch bei einem Wechsel die Messeinrichtung (8) nicht gewechselt wird.

5. Verfahren nach wenigstens einem der vorangegangenen Ansprüche,
**dadurch gekennzeichnet, dass**
die Messeinrichtung eine Bildaufnahmeeinrichtung und/oder ein Pyrometer aufweist.

6. Verfahren nach wenigstens einem der vorangegangenen Ansprüche,
**dadurch gekennzeichnet, dass**
der Messwert berührungslos gemessen wird.

7. Verfahren nach wenigstens einem der vorangegangenen Ansprüche,
**dadurch gekennzeichnet, dass**
mehrere Werte und insbesondere mehrere Temperaturwerte und insbesondere mehrere Werte derselben Blasformanordnungen (6) mittels mehreren Messeinrichtungen gemessen werden.

8. Vorrichtung (1) zum Umformen von Kunststoffvorformlingen (10) zu Kunststoffbehältnissen (20), wobei an einem beweglichen Träger (2) wenigstens eine und bevorzugt eine Vielzahl von Umformungsstationen (4) zum Umformen der Kunststoffvorformlinge (10) zu den Kunststoffbehältnissen (20) angeordnet ist und diese Umformungsstationen (4) wenigstens zeitweise während des Umformungsvorgangs entlang eines vorgegebenen Transportpfads bewegbar sind, wobei die Umformungsstationen jeweils Blasformanordnungen (6) aufweisen, wobei Blasformteile (62, 64) dieser Blasformanordnungen (6) zum Öffnen und Schließen der Blasformanordnungen (6) bewegbar sind, und in einem geschlossenen Zustand der Blasformanordnung (6) in einem durch die Blasformteile (62, 64) gebildeten Hohlraum die Kunststoffvorformlinge (10) durch Beaufschlagung mit einem fließfähigen Medium zu den Kunststoffbehältnissen (20) umformbar sind, wobei die Vorrichtung (1) eine Messeinrichtung (8) aufweist, welche wenigstens zeitweise einen für die Umformungsstation (4) und/oder die Blasformanordnung (6) charakteristischen Wert misst,
wobei
die Messeinrichtung (8) nicht in oder an der Blasformanordnung angeordnet ist,
**dadurch gekennzeichnet, dass**
die Messeinrichtung (8) bevorzugt von der Blasformanordnung (6) beabstandet ist und die Messeinrichtung (8) wenigstens zeitweise auf einen Bereich der Blasformanordnung (6) ausrichtbar ist.

9. Vorrichtung (1) nach Anspruch 8,
**dadurch gekennzeichnet, dass**
die Messeinrichtung (8) insbesondere auf ein an oder in der Blasformanordnung (6) ausgebildetes Loch (14) und insbesondere Sackloch ausrichtbar ist.

10. Vorrichtung (1) nach wenigstens einem der vorangegangenen Ansprüche,
**dadurch gekennzeichnet, dass**
die Vorrichtung (1) mehrere Messeinrichtungen (8) zur Vermessung einer Blasformanordnung (6) aufweist.

11. Vorrichtung (1) nach wenigstens einem der vorangegangenen Ansprüche,
**dadurch gekennzeichnet, dass**
die Vorrichtung (1) eine Kalibriereinrichtung (12) zum Kalibrieren wenigstens einer Messeinrichtung (8) aufweist.

## Claims

1. Method for forming plastic preforms (10) into plastic containers (20), wherein at least one and preferably a plurality of forming stations (4) for forming the plastic preforms (10) into the plastic containers (20) is arranged on a movable carrier (2) and these forming stations (4) are moved along a predetermined transport path at least temporarily during the forming process, wherein the forming stations (4) in each case having blow mould arrangements (6), wherein blow mould parts (62, 64) of these blow mould arrangements (6) being moved for opening and closing the blow mould arrangements (6), and in a closed state of the blow mould arrangement (6) in a cavity formed by the blow mould parts (62, 64) the plastic preforms (10) are formed into the plastic containers (20) by being acted upon by a flowable medium, wherein at least temporarily a value characteristic of the forming station (4) and/or of the blow mould arrangement (6) being measured by means of a measuring device (8),
wherein
the measurement is carried out by means of a measuring device (8) not arranged on the blow mould arrangement (6),
**characterised in that**
the measuring device (8) is aligned at least temporarily with a region of the blow mould arrangement (6).

2. Method according to claim 1,
**characterised in that**
the characteristic value is a temperature and in particular a temperature of at least one region of the blow mould arrangement (6).

3. Method according to at least one of the preceding claims,
**characterised in that**
the blow mould arrangement (6) is moved relative to the measuring device at least temporarily during the measurement.

4. Method according to at least one of the preceding claims,
**characterised in that**
the blow mould arrangements (6) are changed at least temporarily, but the measuring device (8) is not changed during a change.

5. Method according to at least one of the preceding claims,
**characterised in that**
the measuring device comprises an image recording device and/or a pyrometer.

6. Method according to at least one of the preceding claims,
**characterised in that**
the measured value is measured without contact.

7. Method according to at least one of the preceding claims,
**characterised in that**
several values and in particular several temperature values and in particular several values of the same blow mould arrangements (6) are measured by means of several measuring devices.

8. Apparatus (1) for forming plastic preforms (10) into plastic containers (20), wherein at least one and preferably a plurality of forming stations (4) for forming the plastic preforms (10) into the plastic containers (20) is arranged on a movable carrier (2) and these forming stations (4) can be moved along a predetermined transport path at least temporarily during the forming process, wherein the forming stations in each case have blow mould arrangements (6), wherein blow mould parts (62, 64) of these blow mould arrangements (6) can be moved to open and close the blow mould arrangements (6), and in a closed state of the blow mould arrangement (6) in a cavity formed by the blow mould parts (62, 64) the plastic preforms (10) can be formed into the plastic containers (20) by being acted upon by a flowable medium, wherein the apparatus (1) has a measuring device (8) which at least temporarily measures a value characteristic of the forming station (4) and/or the blow mould arrangement (6), wherein
the measuring device (8) is not arranged in or on the blow mould arrangement,
**characterised in that**
the measuring device (8) is arranged preferably at a distance from the blow mould arrangement (6) and the measuring device (8) can be aligned at least temporarily with a region of the blow mould arrangement (6).

9. Apparatus (1) according to claim 8,
**characterised in that**
the measuring device (8) in particular with a hole (14) formed on or in the blow mould arrangement (6) and in particular a blind hole.

10. Apparatus (1) according to at least one of the preceding claims,
**characterised in that**
the apparatus (1) has several measuring devices (8) for measuring a blow mould arrangement (6).

11. Apparatus (1) according to at least one of the preceding claims,
**characterised in that**
the apparatus (1) has a calibration device (12) for calibrating at least one measuring device (8).

## Revendications

1. Procédé de façonnage de préformes en matière plastique (10) en des récipients en matière plastique (20), dans lequel au moins une et de manière préférée une pluralité de stations de façonnage (4) pour façonner les préformes en matière plastique (10) en les récipients en matière plastique (20) est disposée sur un support mobile (2) et ces stations de façonnage (4) sont déplacées le long d'un trajet de transport prédéfini au moins par intermittence au cours de l'opération de façonnage, dans lequel les stations de façonnage (4) présentent respectivement des ensembles de moulage par soufflage (6), dans lequel des parties de moulage par soufflage (62, 64) de ces ensembles de moulage par soufflage (6) sont déplacées pour ouvrir et fermer les ensembles de moulage par soufflage (6) et les préformes en matière plastique (10) sont façonnées en les récipients en matière plastique (20) par exposition à l'action d'un milieu pouvant s'écouler dans un espace creux formé par les parties de moulage par soufflage (62, 64) dans un état fermé de l'ensemble de moulage par soufflage (6), dans lequel une valeur caractéristique de la station de façonnage (4) et/ou de l'ensemble de moulage par soufflage (6) est mesurée au moins par intermittence au moyen d'un système de mesure (8),
dans lequel
la mesure est effectuée au moyen d'un système de mesure (8) non disposé sur l'ensemble de moulage par soufflage (6),
**caractérisé en ce que**
le système de mesure (8) est orienté au moins par intermittence sur une zone de l'ensemble de moulage par soufflage (6).

2. Procédé selon la revendication 1,
**caractérisé en ce que**
la valeur caractéristique est une température et en particulier une température d'au moins une zone de l'ensemble de moulage par soufflage (6).

3. Procédé selon au moins l'une quelconque des revendications précédentes,
**caractérisé en ce que**
l'ensemble de moulage par soufflage (6) est déplacé au moins par intermittence au cours de la mesure par rapport au système de mesure.

4. Procédé selon au moins l'une quelconque des revendications précédentes,
**caractérisé en ce que**
les ensembles de moulage par soufflage (6) sont remplacés au moins par intermittence, toutefois le système de mesure (8) n'est pas remplacé lors d'un remplacement.

5. Procédé selon au moins l'une quelconque des revendications précédentes,
**caractérisé en ce que**
le système de mesure présente un système de prise d'images et/ou un pyromètre.

6. Procédé selon au moins l'une quelconque des revendications précédentes,
**caractérisé en ce que**
la valeur de mesure est mesurée sans contact.

7. Procédé selon au moins l'une quelconque des revendications précédentes,
**caractérisé en ce que**
plusieurs valeurs et en particulier plusieurs valeurs de température et en particulier plusieurs valeurs des mêmes ensembles de moulage par soufflage (6) sont mesurées au moyen de plusieurs systèmes de mesure.

8. Dispositif (1) de façonnage de préformes en matière plastique (10) en des récipients en matière plastique (20), dans lequel au moins une et de manière préférée une pluralité de stations de façonnage (4) pour façonner les préformes en matière plastique (10) en les récipients en matière plastique (20) est disposée sur un support mobile (2) et ces stations de façonnage (4) peuvent être déplacées au moins par intermittence au cours de l'opération de façonnage le long d'un trajet de transport prédéfini, dans lequel les stations de façonnage présentent respectivement des ensembles de moulage par soufflage (6), dans lequel des parties moulées par soufflage (62, 64) desdits ensembles de moulage par soufflage (6) peuvent être déplacées pour ouvrir et fermer les ensembles de moulage par soufflage (6) et les préformes en matière plastique (10) peuvent être façonnées en les récipients en matière plastique (20) par exposition à l'action d'un milieu pouvant s'écouler dans un état fermé de l'ensemble de moulage par soufflage (6) dans un espace creux formé par les parties de moulage par soufflage (62, 64), dans lequel le dispositif (1) présente un système de mesure (8), lequel mesure au moins par intermittence une valeur caractéristique de la station de façonnage (4) et/ou de l'ensemble de moulage par soufflage (6),
dans lequel
le système de mesure (8) n'est pas disposé dans ou sur l'ensemble de moulage par soufflage,
**caractérisé en ce que**
le système de mesure (8) est de manière préférée tenu à distance de l'ensemble de moulage par soufflage (6) et le système de mesure (8) peut être orienté au moins par intermittence sur une zone de l'ensemble de moulage par soufflage (6).

9. Dispositif (1) selon la revendication 8,
**caractérisé en ce que**
le système de mesure (8) peut être orienté en particulier sur un trou (14) réalisé sur ou dans l'ensemble de moulage par soufflage (6) et en particulier un trou borgne.

10. Dispositif (1) selon au moins l'une quelconque des revendications précédentes,
**caractérisé en ce que**
le dispositif (1) présente plusieurs systèmes de mesure (8) pour mesurer un ensemble de moulage par soufflage (6).

11. Dispositif (1) selon au moins l'une quelconque des revendications précédentes,
**caractérisé en ce que**
le dispositif (1) présente un système d'étalonnage (12) pour étalonner au moins un système de mesure (8).
